# EUROPEAN PATENT APPLICATION

(11) **EP 3 882 492 A1**
(43) Date of publication of application: **22.09.2021**
(21) Application number: 21162593.4
(22) Date of filing: 15.03.2021
(51) Int. Cl.: F16H 57/022, B64D 41/00, F16C 25/08, F01D 25/16

(54) **RAM AIR TURBINE GEARBOX ASSEMBLY**

(30) Priority: 17.03.2020 US 202016821848
(71) Applicant: Hamilton Sundstrand Corporation, Charlotte, NC 28217-4578 (US)
(72) Inventor: RUSS, David Everett, Rockford, IL 61108 (US)
(74) Representative: Dehns

(57) **Abstract**

A ram air turbine gearbox includes a turbine drive shaft (108) defining a primary axis, a gear (112) coupled to an outer surface of the drive shaft configured to transfer power from the drive shaft to a generator. A bearing (116) is coupled to the outer surface of the drive shaft aft of the gear along the primary axis, a bearing support (118) is positioned radially outside of the bearing configured for enclosing the bearing within a gearbox housing from an axially aft direction. A bearing liner (120) is positioned radially between the bearing support and the bearing and a crest to crest wave spring positioned radially inside the bearing liner and axially forward of the bearing.

## Description

### Background

### Technological Field

The present disclosure relates to a ram air turbine, and more particularly to a method of arranging a ram air turbine driveshaft and bearings.

### Description of Related Art

Bearings on Ram Air Turbines (RAT) turbine drive shafts require a high preload for optimal bearing stiffness and to minimize shaft whirling. This has traditionally been accomplished by using a stiff wave spring of one or more nested turns. However, wave springs need to be carefully shimmed into place to achieve the correct preload range, and the required shimming process is prone to many kinds of errors. The bearing axial load deflection is often not considered during shimming to cause errors. Multiple parts are required for this installation, which introduces measurement errors. Yet another fixture is required to hold the shaft and housing concentric for proper measurements to avoid shimming errors. Consequently, shimming is a costly, time consuming process in a high cost assembly area.

The conventional methods and systems have generally been considered satisfactory for their intended purpose. However, there is still a need in the art for a RAT assembly having improved concentricity and simpler installation process. There also remains a need in the art for such systems and components that are economically viable. The present disclosure may provide a solution for at least one of these remaining challenges.

### Summary of the Invention

A ram air turbine gearbox includes a turbine drive shaft defining a primary axis, a gear coupled to an outer surface of the drive shaft configured to transfer power from the drive shaft to a generator, a bearing coupled to the outer surface of the drive shaft aft of the gear along the primary axis, a bearing support positioned radially outside of the bearing configured to enclose the bearing within a gearbox housing from an axially aft direction, a bearing liner positioned radially between the bearing support and the bearing, and a spring positioned radially inside the bearing liner and axially fore of the bearing.

The bearing liner can partition the spring from the bearing support, partition the bearing from the bearing support and be at least partially located aft of the gear, fore of the spring, and aft of the bearing. A spacer can be located axially between the bearing and the spring. The bearing liner can be in contact with the gear, the bearing, and the spring.

The spring can be a crest-to-crest wave spring made of a 17-7Ph stainless steel. The crest-to-crest spring can include at least 3 waves. The wave spring is appropriately sized to handle the axial fatigue loads which occur during self-induced vibration. An alternate spring is also considered to be a coil spring.

The gear can be coupled to a generator by a second drive shaft. The gear can be a bevel gear. A spanner nut can be positioned on either end of the bearing configured to preload the shaft. The gear is not in contact with the spring.

The turbine drive shaft may have a lower coefficient of thermal expansion than the coefficient of thermal expansion for the housing of the assembly. These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject invention appertains will readily understand how to make and use the devices and methods of the subject invention without undue experimentation, preferred embodiments thereof will be described in detail herein below with reference to certain figures, wherein:
Fig. 1 is a perspective view of a ram air turbine;
Fig. 2 is a cross-sectional view of Fig. 1, showing the location of the spring;
Fig. 2a is an enlarged view of Fig. 2, showing the location of the spring; and
Fig. 3 is a side view of a spring of Fig. 2, showing the details of a crest-crest spring.

### Detailed Description

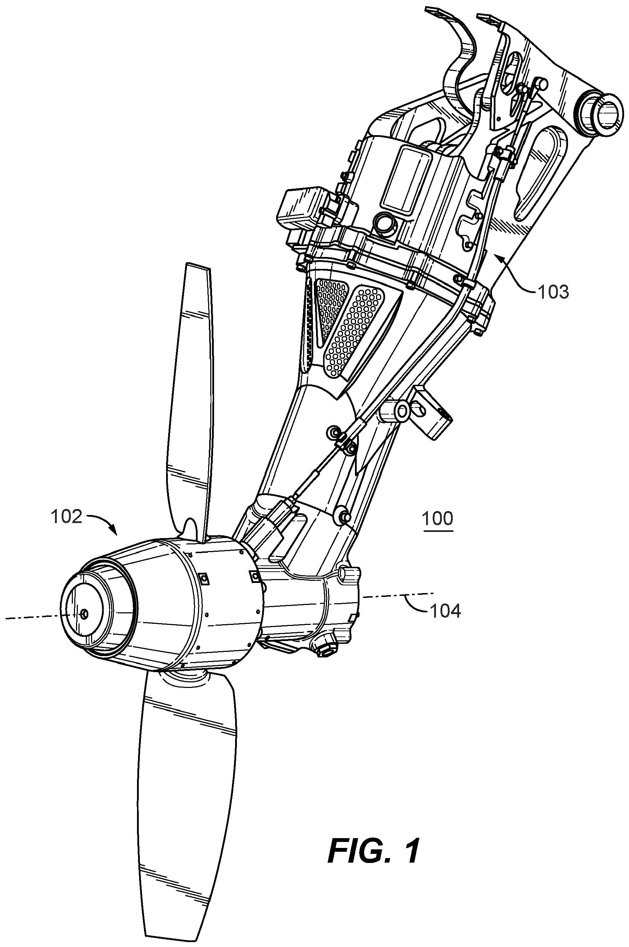

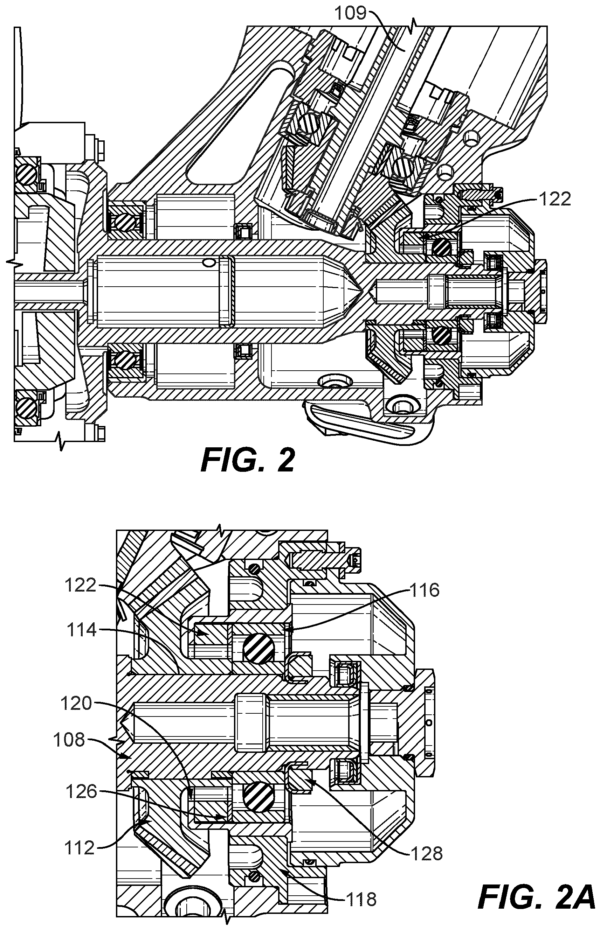

Reference will now be made to the drawings wherein like reference numerals identify similar structural features or aspects of the subject invention. For purposes of explanation and illustration, and not limitation, a partial view of an exemplary embodiment of a ram air turbine (RAT) in accordance with the invention is shown in Fig. 1 and is designated generally by reference character 100. Other embodiments of the RAT assembly in accordance with the invention, or aspects thereof, are provided in Figs. 2-3, as will be described. The methods and systems of the invention can be used to lower cost and hasten assembly without shims, eliminate shimming measurement and calculation errors, and eliminates the need for a holding fixture to center the shaft within the RAT housing.

Fig. 1, shows a RAT 100 in a deployed position. A RAT turbine 102 is configured to freely spin in order to provide auxiliary power to an aircraft in case of flight control power loss of other emergency power loss during flight. In order to allow the turbine to rotate at a high speed, the turbine employs a system of bearings in order to keep the turbine shaft freely spinning and centered.

Fig. 2 shows a cross-section view of the RAT turbine gearbox housing 104. The RAT turbine housing 104 includes a gearbox 106 including a turbine drive shaft 108 defining a primary axis 110. A gear 112 is coupled to an outer surface 114 of the turbine drive shaft 108 in order to transfer power to a generator 103 (shown in Fig. 1) by a second drive shaft 109. In this embodiment the gear 112 is a bevel gear. A bevel gear teeth create an effective travel stop in the forward direction when a gear mesh closes as the backlash goes to zero. Typically, RATs do not include any other axial travel stop.

Fig. 2 further shows a bearing 116 coupled to the outer surface 114 of the turbine drive shaft 108 located aft of the gear 112. A bearing support 118 is positioned outside of the bearing 116 to enclose the bearing 116 within the RAT turbine gearbox housing 104 in a radial direction. A bearing liner 120 positioned radially between the bearing support 118 and the bearing 116 in order to enclose the bearing 116 and resist housing thermal expansion and housing wear. A spring 122 is also positioned inside the bearing liner 120. The bearing liner forms a cavity 124 for housing the spring 122 and bearing 116 within the cavity 124. The bearing liner 120 is designed to not contact the gear, while providing support for spring 122. The bearing liner 120 partitions the spring 122 from the bearing support 118, and the bearing 116 from the bearing support 118. A spacer 126 is located axially between the bearing 116 and the spring 122 to provide a wider load bearing surface for the spring.

Normal drag load on the blades of the turbine during operation push the turbine drive shaft 108 aft into the forward bearing, in the same direction as the spring 122 loads the forward bearing. Motion of the turbine drive shaft 108 in the forward direction can occur at the end of deployment, and during severe self-induced vibration from turbine unbalance. The spring 122 loads bearing 116 axially for improved bearing stiffness and reduced shaft whirl.

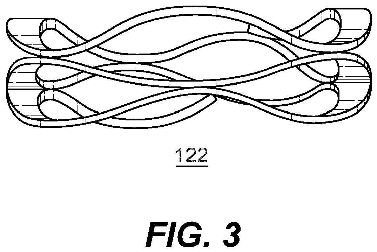

The spring 122 can be a crest-to-crest wave spring made of a 17-7Ph stainless steel, as shown in Fig. 3. The crest-to-crest spring 122 can include at least 3 waves. A crest-to-crest wave spring is chosen because of the low spring rate. Tolerance variation in the size of the cavity 124 does not result in large changes in stress and spring load. Alternatively, a coil spring could also be considered in place of the wave spring. A spanner 128 can be positioned axially aft of the bearing 116 configured to preload the turbine drive shaft 108 and spring 122. The spring 122 must function even when the ambient temperature is -65°F and thermal effects reduce axial clearance because RAT turbine gearbox housings 104 are typically made of aluminum and shrink faster than turbine drive shafts 108 which are typically produced from steel.

The methods and systems of the present disclosure, as described above and shown in the drawings, provide for a RAT with superior properties including increased reliability and stability and reduced complexity, and/or assembly cost. While the apparatus and methods of the subject disclosure have been showing and described with reference to embodiments, those skilled in the art will readily appreciate that changes and/or modifications may be made thereto without departing from the scope of the subject disclosure.

## Claims

1. A ram air turbine gearbox comprising:
a turbine drive shaft (108) defining a primary axis;
a gear (112) coupled to an outer surface of the drive shaft configured to transfer power from the drive shaft to a generator;
a bearing (116) coupled to the outer surface of the drive shaft aft of the gear along the primary axis;
a bearing support (118) positioned radially outside of the bearing configured to enclose the bearing within a gearbox housing from an axially aft direction;
a bearing liner (120) positioned radially between the bearing support and the bearing; and
a spring positioned radially inside the bearing liner and axially fore of the bearing.

2. The gearbox of any preceding claim, wherein the bearing liner partitions the spring from the bearing support.

3. The gearbox of any preceding claim, wherein the bearing liner partitions the bearing from the bearing support.

4. The gearbox of any preceding claim, wherein the bearing liner is at least partially located aft of the gear, fore of the spring, and aft of the bearing.

5. The gearbox of any preceding claim, wherein the bearing liner is in contact with the gear, the bearing, and the spring.

6. The gearbox of any preceding claim, further comprising a spacer located axially between the bearing and the spring.

7. The gearbox of any preceding claim, wherein the spring is a crest-to-crest wave spring.

8. The gearbox of claim 7, wherein the crest-to-crest spring includes at least at least 3 waves.

9. The gearbox of any preceding claim, wherein the spring is a 17-7Ph stainless steel.

10. The gearbox of any preceding claim, wherein the spring is a coil spring.

11. The gearbox of any preceding claim, wherein the gear is coupled to a generator via a second drive shaft.

12. The gearbox of any preceding claim, wherein the gear is a bevel gear.

13. The gearbox of any preceding claim, further comprising a spanner positioned axially aft of the bearing configured to preload the shaft and spring.

14. The gearbox of any preceding claim, wherein the gear is not in contact with the spring.

15. The gearbox of any preceding claim, wherein the shaft includes a lower coefficient of thermal expansion than a coefficient of thermal expansion of a housing of the assembly.
